## Europäisches Patentamt
## European Patent Office
## Office européen des brevets

(11) Veröffentlichungsnummer: **0 009 682**
**B1**

(19)

(12) # EUROPÄISCHE PATENTSCHRIFT

(45) Veröffentlichungstag der Patentschrift: **11.05.83**

(51) Int. Cl.³: **A 01 K 63/04, B 01 D 29/00**

(21) Anmeldenummer: **79103416.8**

(22) Anmeldetag: **12.09.79**

(54) **Wasserfilter, insbesondere für Aquariumwasser.**

(30) Priorität: **06.10.78 DE 2843641**

(43) Veröffentlichungstag der Anmeldung:
**16.04.80 Patentblatt 80/8**

(45) Bekanntmachung des Hinweises auf die Patenterteilung:
**11.05.83 Patentblatt 83/19**

(84) Benannte Vertragsstaaten:
**AT BE CH FR GB IT LU NL SE**

(56) Entgegenhaltungen:
**DE - A - 2 641 023**
**DE - A - 2 714 530**
**DE - B - 2 434 075**
**DE - C - 1 045 371**
**DE - C - 1 134 785**
**DE - U - 7 301 024**
**DE - U - 7 405 001**
**DE - U - 7 622 723**
**FR - A - 2 127 360**
**US - A - 2 693 281**
**US - A - 3 592 765**

(73) Patentinhaber: **NUOVA-Aquaristik Helmut Hofmann GmbH & Co. KG**
**D-5063 Overath-Eulenthal (DE)**

(72) Erfinder: **Hofmann, Kurt Helmut**
**verstorben**
**D-5063 Overath-Eulenthal (DE)**

(74) Vertreter: **Dahlke, Werner, Dipl.-Ing. et al,**
**Frankenforster Strasse 137**
**D-5060 Bergisch Gladbach 3 (DE)**

## Wasserfilter, insbesondere für Aquariumwasser

Die Erfindung betrifft einen Wasserfilter, insbesondere für Aquariumwasser, mit einer Filterkammer, die einen Wassereinlaß une einen Wasserauslaß aufweist und mit auswechselbarem Filtermaterial gefüllt ist, sowie einer dem Wasserauslaß nachgeschalteten Förderpumpe, worin die Filterkammer durch den Ringraum zwischen zwei konzentrischen Rohren unterschiedlichen Durchmessers gebildet ist, das äußere Rohr als Wassereinlaß eine sich über seinen gesamten Umfang und seine gesamte Länge verteilt angeordnete Perforierung aufweist, das innere Rohr ebenfalls über seinen gesamten Umfang und seine gesamte Länge mit einer Perforierung versehen ist und sich an das innere Rohre eine Wasserauslaßleitung anschließt.

Bei bekannten Wasserfiltern der genannten Art (US—A—3 592 765 oder DE—U—7 301 024) bestehen die die Filterkammer bildenden konzentrischen Rohre aus glattem Material mit Ausnehmungen zum Durchtritt des zu filternden Wassers. Wenn die Ausnehmungen des äußeren Rohres als Wassereinlaß in die Filterkammer dienen, neigen diese leicht dazu, zu verstopfen. Ferner ist bei den bekannten Konstruktionen, wenn diese noch mit einem Vorfilter, beispielsweise einem Schaumstoffüberzug, versehen sind, nicht gewährleistet, daß ein optimaler Durchtritt des Wassers in die Filterkammer erfolgt.

Der Erfindung liegt daher die Aufgabe zugrunde, den Wasserdurchtritt in die Filterkammer so zu gestalten, daß eine möglichst große Wassermenge durch die Filterkammer hindurchtritt und sämtliche Bereiche des Filtermaterials voll ausgenutzt werden.

Erfindungsgemäß wird diese Aufgabe dadurch gelöst, daß das äußere Rohr als Wellrohr mit Schraubenlinienförmiger Wellung ausgebildet ist und daß die Perforierung jeweils zwischen den nach außen gerichteten Wellrippen liegt.

Die schraubenlinienförmige, nach außen gerichtete Wellung erzeugt eine Strömung um das Rohr, so daß das zu reinigende Wasser stets in erster Linie zu denjenigen Filterbereichen fließt, in denen das Filtermaterial am wenigsten verschlammt ist. Dadurch wird nicht nur der größtmögliche Wasserdurchlaß durch den Filter gewährleistet, sondern es wird auch für eine gleichmäßige Verschlammung des Filtermaterials gesorgt und somit die Funktionstüchtigkeit des Filters mit einer einmaligen Filtermaterialfüllung verlängert. Als Wellrohr kann beispielsweise ein dünnwandiges Kunststoffrohr verwendet werden.

Die Verwendung des Wellrohres ist darüberhinaus auch konstruktiv sehr vorteilhaft. Auf beiden Enden des Wellrohres können Endkappen aufgeschraubt werden, die radial vorspringende Flansche aufweisen, wobei die beiden Endkappen mittige Fassungen zur Halterung des inneren perforierten Rohres aufweisen und die Endkappe auf der Wasserauslaßseite zusätzlich eine mittige Wasserauslaßöffnung aufweist. Die radial vorspringenden Flansche der Endkappen dienen gleichzeitig zur Halterung des als Vorfilter dienenden äußeren Schaumstoffmantels.

Die auf der Wasserauslaßseite angeordnete Endkappe kann einen Bajonetanschluß zur Verbindung des Wasserauslasses mit dem Saugrohr einer Pumpe aufweisen. Dadurch ist die Montage bzw. das Herausnehmen der Filterpatrone zum Auswechseln des Filtermaterials sehr einfach.

Bei Verwendung des Filters als Außenfilter kann die durch die konzentrischen Rohre gebildete Filterpatrone in ein aufrecht stehendes, eimerartiges Gefäß eingreifen, dessen Innendurchmesser etwas größer ist als der Außendurchmesser der Filterpatrone. Die obere Endkappe der Filterpatrone kann dabei unmittelbar mit einem an dem Verschlußdeckel des Filtergefäßes befestigten Pumpengehäuse verbunden sein, wobei der Filterwassereinlaß durch den Deckel hindurch in den äußeren Ringraum zwischen der Innenwand des Filtergefäßes und der Filterpatrone mündet.

Bei Verwendung des Filters als Innenfilter kann die mit der Wasserauslaßöffnung versehene Endkappe der Filterpatrone über ein teleskopartig längenverstellbares Saugrohr mit einem Pumpengehäuse verbunden sein. Aufgrund des längenverstellbaren Saugrohres kann die optimale Eintauchtiefe der Patrone in das Aquariumwasser gewählt werden. Zur Verbindung des Saugrohres mit der betreffenden Endkappe der Filterpatrone einerseits und dem Pumpengehäuse andererseits können Bajonettverschlüsse vorgesehen sein, die die Montage erheblich vereinfachen.

Bei der Verwendung des Filters als Innenfilter können für größere Filterleistungen auch mehrere Filterpatronen miteinander gekoppelt werden. Dabei können zum Beispiel mehrere Filterpatronen über Kupplungsstücke miteinander verbunden werden, und zwar in Hintereinanderschaltung. Eine solche Reihe hintereinandergeschalteter Filterpatronen kann beispielsweise auf dem Grund eines größeren Aquariums gelegt werden. Alternativ können zur Kopplung mehrerer Filterpatronen auch die Wasserdurchlaßöffnungen der Endkappen mehrerer Patronen an ein gemeinsames Sammelgefäß angeschlossen werden, wobei dieses Sammelgefäß mit einem zu einer gemeinsamen Pumpe führenden Steigrohr verbunden ist. Das Sammelgefäß hat zweckmäßig eine flache Form, weist in der Mitte seiner Oberfläche einen Anschluß für das Steigrohr auf und ist um diesen Anschluß herum mit den Anschlüssen für mehrere Filterpatronen versehen.

Eine solche Anordnung mit mehreren parallelgeschalteten Filterpatronen eignen sich sehr gut für Springbrunen, Freilandteiche und dergleichen, wobei die gesamte Vorrichtung flach auf dem Boden gestellt wird, so daß die Filterpatronen mit ihren verschlossenen Enden nach oben zeigen. Sämtliche Verbindungen sind vorzugsweise als Bajonettanschlüsse ausgebildet.

Bei sämtlichen Ausführungsformen kann das Pumpengehäuse über einen Bajonettverschluß mit einem Antriebsmotor mit allseitig geschlossenem Gehäuse verbunden sein, wobei der Antrieb vom Motor zur Pumpe über durch die Gehäusewände hindurchwirkende Magnetmitnehmer erfolgt.

Die Erfindung ist in der Zeichnung beispielsweise veranschaulicht und im nachstehenden im einzelnen anhand der Zeichnung beschrieben. Es zeigen:

Fig. 1 in auseinandergezogener Darstellung die Teile eines Außenfilters, teilweise im Schnitt,

Fig. 2 in auseinandergezogener Darstellung die Teile eines Innenfilter,

Fig. 3 zwei mit einem Kupplungsstück zu verbindende Filterpatronen und

Fig. 4 mehrere an ein gemeinsames Sammelgefäß angeschlossene Filterpatronen.

Wie aus der Zeichnung hervorgeht, ist der wesentliche Bestandteil sowohl beim Außenfilter als auch beim Innenfilter eine Filterpatrone 1. Diese besteht aus einem Außenrohr 2, einem konzentrisch in diesem angeordnetem Innenrohr 3, Endkappen 4 und 5 sowie einem Außenmantel 6 aus Wasserdurchlässigem Schaumstoff.

Das äußere Rohr 2 ist als Wellrohr mit schraubenlinienförmiger Wellung ausgebildet und weist über seinen gesamten Umfang und seine gesamte Länge eine Perforierung 7 auf, die jeweils zwischen den nach außen gerichteten Wellrippen 8 liegt.

Das konzentrisch angeordnete Innenrohr 3 ist im wesentlichen zylindrisch ausgebildet und ebenfalls über seinen gesamten Umfang und seine gesamte Länge mit einer Perforierung 9 versehen.

Der Zwischen den beiden konzentrisch angeordneten perforierten Rohren 2 und 3 gebildete Ringraum 10 ist mit Filtermaterial, wie synthetischer Watte oder dergleichen, gefüllt.

Die beiden an beiden Enden der konzentrischen Rohre 2 und 3 vorgesehenen Endkappen 4 und 5 sind als einstückige Kunststoffspritzteile ausgebildet. Die dem ringförmigen Filterraum 10 zugewandten Enden der Endkappen 4 und 5 sind mit Gewindestutzen 11 bzw. 12 versehen, die in das durch die Wellrippen 8 gebildete Gewinde eingeschraubt werden. Die Endkappen 4 und 5 können so weit in das Wellrohr 2 eingeschraubt werden, bis ein vorspringender Absatz 13 an den Stirnenden des äußeren Rohres 2 zur Anlage kommt. In ihrere Mitte weisen die Endkappen 4 und 5 rohrförmige Stutzen 14 bzw. 15 auf, in welche das Innenrohr 3 eingreift und dadurch in konzentrischer Lage zu dem Außenrohr 2 gehalten ist.

Ferner sind die beiden Endkappen 4 und 5 mit radial vorspringenden Flanschen 16 bzw. 17 versehen, die insbesondere zur Festlegung des Schaumstoff-Außenmantels 6 dienen.

In der Mitte sind die beiden Endkappen 4 und 5 mit Durchlaßöffnungen versehen. Bei der unteren Endkappe 5 ist der Wasserdurchlaß jedoch mit einem Stopfen 18 verschlossen. Bei der oberen Endkappe 4 wird die Wasserdurchlaßöffnung unmittelbar mit dem Saugrohr 19 einer Kreiselpumpe 20 verbunden, die über einen Motor 21 antreibbar ist. Das Saugrohr 19 der Kreiselpumpe 20 kann mit Hilfe eines Bajonettverschlusses 22 unmittelbar mit der Wasseraustrittsöffnung der oberen Endkappe 4 verbunden werden. In gleicher Weise wird der mit einem allseits mit einem geschlossenen Gehäuse versehene Motor 21 über einen Bajonettverschluß 23 an der Oberseite der Kreiselpumpe 20 befestigt.

Das Gehäuse der Kreiselpumpe ist unmittelbar mit einem Verschlußdeckel 35 für ein aufrechtstehendes, eimerförmiges Gefäß 24 verbunden, in welches die Filterpatrone 1 eingesetzt werden kann. Im eingesetzten Zustand taucht die Filterpatrone 1 vollständig in das Gefäß 24 ein, während der Verschlußdeckel 35 fest und dicht auf dem oberen Rand 25 des Gefäßes 24 sitzt. Zur Abdichtung sämtlicher Teile können zusätzlich Dichtringe verwendet werden.

Die Funktion des Außenfilters ist wie folgt:

Nach dem Zusammenbau der Einzelteile wird in einen Einlaßstutzen 26, der oben auf dem Verschlußdeckel 35 angeordnet ist, das zu filternde Wasser eingeleitet, das in den Ringraum 27 gelangt, der zwischen der Innenwandung des Gefäßes 24 und der Außenseite der Fiterpatrone 1 freibleibt. Von dort aus tritt das Wasser zunächst in den die Patrone 1 umgebenden Schaumstoffmantel 6 ein, wo bereits die gröbsten Schlammteilchen hängenbleiben. Dann gelangt das bereits vorgefilterte Wasser zu dem gewellten Außenrohr 2, wo es durch die Perforierung 7 in die ringförmige Filterkammer 10 eintritt. Beim Durchströmen des Filtermaterials bleiben auch die kleineren Verunreinigungsteilchen des Wassers hängen und das vollständig gereinigte Wasser gelangt Schließlich durch die Perforierung 9 in die durch den Innenraum des Innenrohres 2 geleitete Klarwasserkammer, aus der es über den Saugstutzen 19 in die Kreiselpumpe 20 hineingesaugt und durch einen durch den Deckel 35 hindurchgeführten Auslaßstutzen 28 hinausgedrückt wird. Von dort wird das gereinigte Wasser beispielsweise wieder in das Aquarium geleitet.

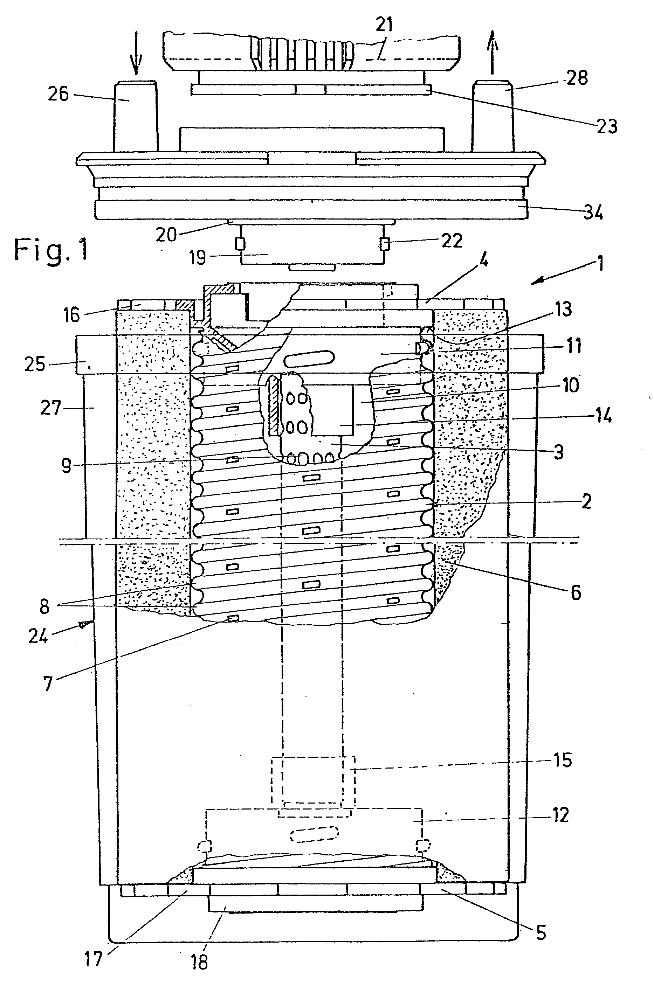

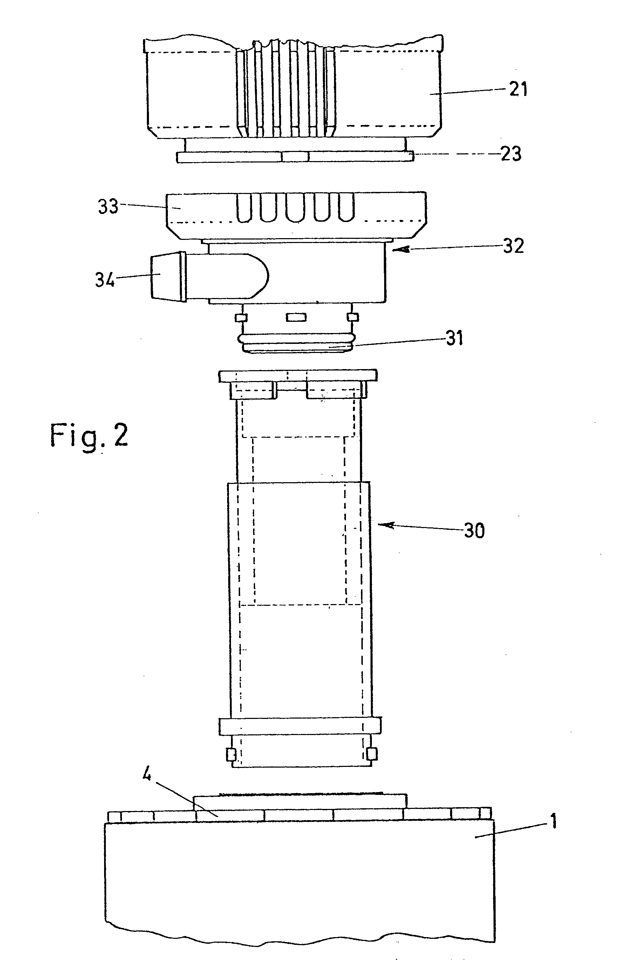

Bei dem in Fig. 2 dargestellten Ausführungsbeispiel dient die Patrone 1 als Innenfilter, d.h., daß sie unmittelbar in das zu reinigende Medium, beispielsweise Aquariumwasser, eingehängt wird. Die Filterpatrone 1 ist in gleicher Weise aufgebaut wie bei dem in Fig. 1 dargestellten Ausführungsbeispiel, so daß auf die Filterpatrone nicht noch einmal eingegangen zu werden braucht.

Damit die Patrone bei diesem Ausführungsbeispiel höheverstellbar ist, schließt sich an die Endkappe 4 ein teleskopartig längenverstellbares Steigrohr 30 an, dessen oberes Ende an das Saugrohr 31 des Gehäuses einer Kreiselpumpe 32 angeschlossen werden kann. Die Kreiselpumpe 32 wird mit einem Überwurfring 33 and dem Bajonettverschluß 23 des bereits in Fig. 1 dargestellten Motors 21 befestigt.

Bei diesem Ausführungsbeispiel tritt das zu reinigende Wasser, in welches die Patrone 1 eingetaucht ist, allseitig durch den Schaumstoffmantel 6 ein und gelangt unter gleichzeitiger Reinigung in das Innere des perforierten Innenrohres 3, von wo aus das gereinigte Wasser über das Steigrohr 30 von der Kreiselpumpe 32 abgesaugt wird. Über einen seitlich aus dem Gehäuse der Kreiselpumpe 32 herausgeführten Auslaßstutzen 34 wird das gereinigte Wasser entnommen.

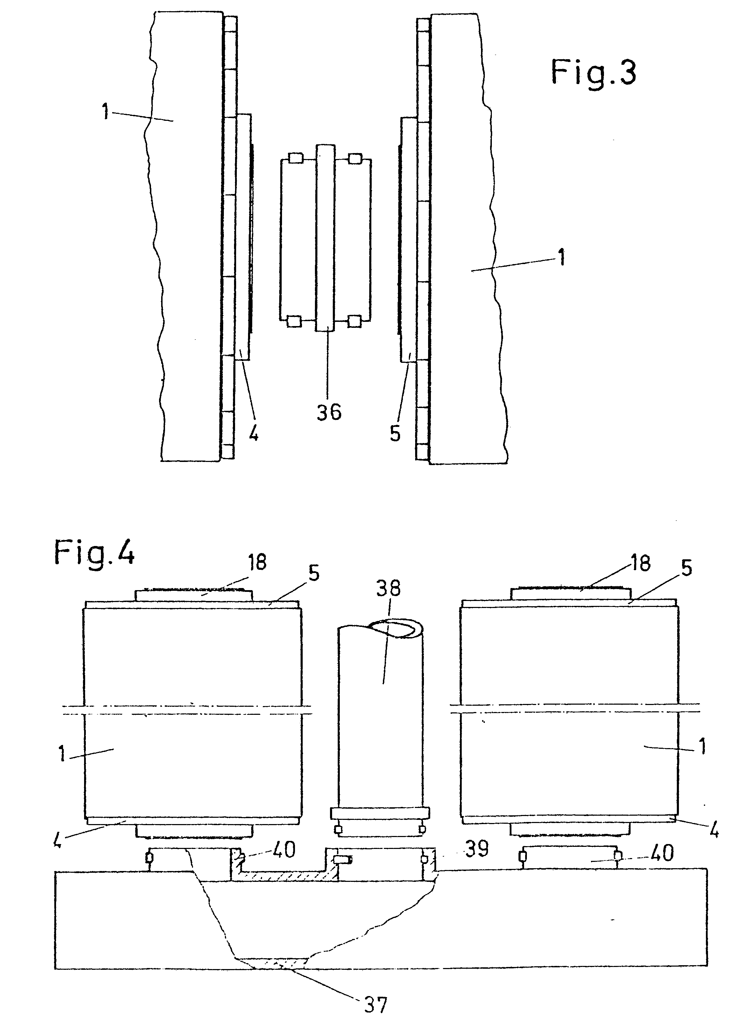

Bei der Verwendung der Patrone 1 als Innenfilter ist es entsprechend dem in Fig. 3 dargestellten Ausführungsbeispiel auch möglich, mehrere Filterpatronen über Kupplungsstücke 36 miteinander zu verbinden. Die Filterpatronen 1 sind in gleicher Weise aufgebaut wie die in Fig. 1 im einzelnen dargestellte Patrone. Zur Verbindung zweier Patronen wird bei der einen Patrone der in der Endkappe 5 sitzende Stopfen 18 entfernt und an dessen Stelle das Kupplungsstück 36 eingesetzt. Zur Verbindung des Kupplungsstückes 36 mit der Endkappe 5 dient der gleiche Bajonettverschluß, der auch zur Befestigung des Stopfens 18 verwendet wurde. Im zusammengesetzten Zustand ist die Endkappe 5 der einen Filterpatrone mit der Endkappe 4 der anderen Filterpatrone über das Kupplungsstück 36 fest und dicht verschlossen. Nach diesem Schema können auch mehr als zwei Patronen 1 miteinander verbunden werden.

Nach Fig. 4 werden mehrere Filterpatronen 1 in Parallelschaltung mit einem gemeinsamen flachen Sammelgefäß 37 verbunden. Das beispielsweise rund oder sternförmig ausgebildete Sammelgefäß 37 weist an seiner Oberseite einen mittigen Bajonettanschluß 39 für ein Steigrohr 38 auf, das in gleicher Weise ausgebildet sein kann, wie das teleskopartig längenverstellbare Steigrohr 30 gemäß Fig. 2. Rund um den Steigrohranschluß 39 sind Bajonettschlüsse 40 für die Patronen 1 vorgesehen. Die Patronen 1 werden dabei mit den Auslaßöffnungen ihrer Endkappen 4 auf die Bajonettanschlüsse 40 aufgesetzt und durch leichte Drehung mit diesen verbunden. Die nach oben weisenden Endkappen 5 sind ebenso wie bei dem in Fig. 1 dargestellten Ausführungsbeispiel mit einem Stopfen verschlossen.

**Patentansprüche**

1. Wasserfilter, insbesondere für Aquariumwasser, mit einer Filterkammer, die einen Wassereinlaß und einen Wasserauslaß aufweist und mit auswechselbarem Filtermaterial gefüllt ist, sowie einer dem Wasserauslaß nachgeschalteten Förderpumpe, worin die Filterkammer durch den Ringruam (10) zwischen zwei konzentrischen Rohren (2, 3) unterschiedlichen Durchmessers gebildet ist, das äußere Rohr (2) als Wassereinlaß eine sich über seinen gesamten Umfang und seine gesamte Länge verteilt angeordnete Perforierung (7) aufweist, das innere Rohr (3) ebenfalls über seinen gesamten Umfang und seine gesamte Länge mit einer Perforierung (9) versehen ist und sich an das innere Rohr (3) eine Wasserauslaßleitung anschließt, dadurch gekennzeichnet, daß das äußere Rohr (2) als Wellrohr mit schraubenlinienförmiger Wellung (8) ausgebildet ist und daß die Perforierung (7) jeweils zwischen den nach außen gerichteten Wellrippen liegt.

2. Wasserfilter nach Anspruch 1, dadurch gekennzeichnet, daß das äußere perforierte Rohr (2) von einem Mantel (6) aus wasserdurchlässigem Schaumstoff (6) umgeben ist.

3. Wasserfilter nach Anspruch 1 oder 2, dadurch gekennzeichnet, daß auf beiden Enden des Wellrohres (2) Endkappen (4, 5) aufgeschraubt sind, die radial vorspringende Flansche (16, 17) aufweisen, daß die beiden Endkappen (4, 5) mittige Fassungen (14, 15) zur Halterung des inneren perforierten Rohres (3) aufweisen und daß die auf der Wasserauslaßseite angeordnete Endkappe (4) eine mittige Wasserauslaßöffnung aufweist.

4. Wasserfilter nach Anspruch 3, dadurch gekennzeichnet, daß die auf der Wasserauslaßseite angeordnete Endkappe (4) einen Bajonettanschluß zur Verbindung des Wasserauslasses mit dem Saugrohr (19) einer Pumpe (20) aufweist.

5. Wasserfilter nach einem der Ansprüche 1 bis 4 als Außenfilter, dadurch gekennzeichnet, daß die durch die konzentrischen Rohre (2, 3) gebildete Filterpatrone (1) in ein aufrecht stehendes, eimerartiges Filtergefäß (24) eingreift, dessen Innendurchmesser etwas größer ist als der Außendurchmesser der Filterpatrone (1), daß die obere Endkappe (4) der Filterpatrone (1) unmittelbar mit einem an dem Deckel (35) des Filtergefäßes (24) befestigten Pumpengehäuse verbunden ist und daß der Filterwassereinlaß (26) durch den Deckel (35) hindurch in den äußeren Ringraum (27) zwischen der Innenwand des Filtergefäßes (24) und der Filterpatrone (1) mündet.

6. Wasserfilter nach einem der Ansprüche 1 bis 4 als Innenfilter, dadurch gekennzeichnet, daß die mit der Wasserauslaßöffnung versehene Endkappe (4) der Filterpatrone (1) über ein teleskopartig längenverstellbares Steigrohr (30) mit einem Pumpengehäuse (32) verbunden ist.

7. Wasserfilter nach Anspruch 6, dadurch gekennzeichnet, daß zur Verbindung des Steigrohres (30) mit der mit der Wasserauslaßöffnung versehenen Endkappe (4) der Filterpatrone (1) einerseits und dem Pumpengehäuse (32) andererseits Bajonettverschlüsse vorgesehen sind.

8. Wasserfilter nach Anspruch 6 oder 7, dadurch gekennzeichnet, daß mehrere Filterpatronen (1) über Kupplungsstücke (36) miteinander verbunden sind.

9. Wasserfilter nach Anspruch 6 oder 7, dadurch gekennzeichnet, daß die Wasserdurchlaßöffnungen der Endkappen (4) mehrerer Filterpatronen (1) an ein gemeinsames Sammelgefäß (37) angeschlossen sind und daß dieses Sammelgefäß (37) mit einem zu einer Pumpe führenden Steigrohr (38) verbunden ist.

10. Wasserfilter nach Anspruch 9, dadurch gekennzeichnet, daß das Sammelgefäß (37) eine flache Form hat, in der Mitte seiner Oberseite den Anschluß (39) für das Steigrohr (38) aufweist und um diesen Anschluß (39) herum mit den Anschlüssen (40) für mehrere Filterpatronen (1) versehen ist.

11. Wasserfilter nach einem der Ansprüche 1 bis 10, dadurch gekennzeichnet, daß das Pumpengehäuse (20; 32) über einen Bajonettanschluß (23) mit einem Antriebsmotor (21) mit allseits geschlossenem Gehäuse verbunden ist, wobei der Antriebüber durch die gehäusewände hindurchwirkende Magnetmitnehmer erfolgt.

## Revendications

1. Filtre à eau, en particulier pour eau d'aquarium, avec une chambre de filtration qui comporte une entrée d'eau et une sortie d'eau et qui est remplie de matière filtrante remplaçable, ainsi qu'avec une pompe de circulation située en aval de la sortie d'eau, la chambre de filtration étant constituée par un espace annulaire (10) entre deux tubes concentriques (2, 3) de diamètres différents, le tube extérieur (2) présentant, en tant qu'entrée d'eau, des perforations (7) réparties sur toute sa circonférence et sur toute sa longueur, le tube intérieur (3) étant également muni de perforations (9) sur toute sa circonférence et sur toute sa longueur et une conduite d'échappement de l'eau se raccordant au tube intérieur (3), caractérisé en ce que le tube extérieur (2) est réalisé sous forme de tube ondulé avec une ondulation de forme hélicoïdale (8) et en ce que les perforations (7) se trouvent entre les nervures de l'ondulation en saillie vers l'extérieur.

2. Filtre à eau selon la revendication 1, caractérisé en ce que le tube perforé extérieur (2) est entouré d'une enveloppe (6) de mousse perméable à l'eau.

3. Filtre à eau selon la revendication 1 ou 2, caractérisé en ce qu'il est vissé, aux deux extrémités du tube ondulé (2), des coiffes d'extrémité (4, 5) qui présentent des brides (16, 17) faisant saillie radialement, en ce que les deux coiffes d'extrémité (4, 5) comportent des montures centrales (14, 15) pour le maintien du tube perforé intérieur (3) et en ce que la coiffe d'extrémité (4) située du côté de l'évacuation de l'eau présente une ouverture centrale de sortie de l'eau.

4. Filtre à eau selon la revendication 3, caractérisé en ce que la coiffe d'extrémité (4) située du côté de l'évacuation de l'eau comporte un joint à baïonnette pour le raccordement de l'ouverture de sortie de l'eau au tuyau d'aspiration (19) d'une pompe (20).

5. Filtre à eau selon l'une quelconque des revendications 1 à 4, utilisé comme filtre extérieur, caractérisé en ce que la cartouche de filtre (1), constituée par les tubes concentriques (2, 3), est insérée dans un récipient de filtre en forme de gobelet (24) qui est placé debout et dont le diamètre intérieur est un peu plus grand que le diamètre extérieur de la cartouche de filtre (1), en ce que la coiffe d'extrémité supérieure (4) de la cartouche de filtre (1) est raccordée directement à un corps de pompe (20) fixé au couvercle (35) du récipient de filtre (24) et en ce que l'orifice d'entrée d'eau (26) du filtre traverse le couvercle (35) pour déboucher dans l'espace annulaire extérieur (27) entre la paroi interne du récipient de filtre (24) et la cartouche de filtre (1).

6. Filtre à eau selon l'une quelconque des revendications 1 à 4, utilisé comme filtre intérieur, caractérisé en ce que la coiffe d'extrémité (4) de la cartouche de filtre (1) qui est munie de l'orifice d'évacuation de l'eau est raccordée à un corps de pompe (32) par un tube ascendant (30) dont la longueur est réglable télescopiquement.

7. Filtre à eau selon la revendication 6, caractérisé en ce qu'il est prévu des joints à baïonnette pour le raccordement du tube ascendant (30) à la coiffe d'extrémité (4) de la cartouche de filtre (1) qui est munie de l'orifice d'évacuation de l'eau d'une part et au corps de pompe (32) d'autre part.

8. Filtre à eau selon la revendication 6 ou 7, caractérisé en ce que plusieurs cartouches de filtre (1) sont réunies entre elles au moyen de pièces d'accouplement (36).

9. Filtre à eau selon la revendication 6 ou 7, caractérisé en les orifices de passage de l'eau des coiffes d'extrémité (4) de plusieurs cartouches de filtre (1) sont raccordés à un récipient collecteur commun (37) et en ce que ce récipient collecteur (37) est raccordé à un tube ascendant (38) qui aboutit à une pompe.

10. Filtre à eau selon la revendication 9, caractérisé en ce que le récipient collecteur (37) a une forme aplatie, comporte au milieu de sa surface supérieure le joint (39) pour le tube ascendant (38) et est muni, tout autour de ce joint (39), des joints (40) pour plusieurs cartouches de filtre (1).

11. Filtre à eau selon l'une quelconque des revendications 1 à 10, caractérisé en ce que le corps de pompe (20; 32) est raccordé par un joint à baïonnette (23) à un moteur d'entraînement comportant un carter complètement hermétique, la transmission s'effectuant au moyen d'organes d'entraînement magnétiques qui agissent à travers la paroi du carter.

**Claims**

1. Water filter, in particular for aquarium water, including a filter chamber, having a water inlet and a water outlet, and being filled with exchangeable filter material, as well as a boost pump arranged downstream of said water outlet, wherein said filter chamber is defined by the annular space (10) between two concentric tubes (2, 3) of different diameters, the outer tube (2) has as a water inlet a perforation (7) arranged spaced around its entire circumference and throughout its entire length, the inner tube (3) is likewise provided with a perforation (9) arranged around its entire circumference and throughout its entire length, and a water outlet line is connected to the inner tube (3) characterized in that the outer tube (2) is formed as corrugated tube with helical corrugation (8) and that the perforation (7) is respectively disposed between the outwardly directed corrugation ribs.

2. Water filter as set forth in claim 1, characterized in that the outer perforated tube (2) is encompassed by a shell (6) of water-permeable foam (6).

3. Water filter as set forth in claim 1 or 2, characterized in that on both ends of the corrugated tube (2) end caps (4, 5) are screwed on having radially projecting flanges (16, 17) that the two end caps (4, 5) have central locations (14, 15) for retaining the inner perforated tube (3) and that the end cap (4) arranged at the water outlet has a central water outlet opening.

4. Water filter as set forth in claim 3, characterized in that the end cap (4) arranged at the water outlet has a bajonet connection for a connection of the water outlet to the riser tube (19) of a pump (20).

5. Water filter as set forth in one of claims 1 to 4, as an external filter, characterized in that the filter cartridge (1) defined by the concentric tubes (2, 3) extends into an upright, bucket-like filter vessel (24) the inner diameter of which is a little larger than the outer diameter of the filter cartridge (1), that the upper end cap (4) of the filter cartridge (1) is directly connected to a pump casing secured to the closure (35) of the filter vessel (24) and that the filter water inlet (26) opens through the closure (35) into the outer annular space (27) between the inner wall of the filter vessel (24) and the filter cartridge (1).

6. Water filter as set forth in one of claims 1 to 4, as an internal filter, characterized in that the end cap (4) provided with the water outlet opening of the filter cartridge (1) is connected by means of a riser tube (30) adjustable in its length telescopically to the pump casing (32).

7. Water filter as set forth in claim 6, characterized in that for connecting the riser tube (30) to the end cap (4) of the filter cartridge (1) provided with the water outlet opening, on the one hand, and the pump casing (32), on the other hand, bajonet connections are provided.

8. Water filter as set forth in claim 6 or 7, characterized in that a plurality of filter cartridges (1) are interconnected via coupling members (36).

9. Water filter as set forth in claim 6 or 7, characterized in that the water passage openings of the end caps (4) of a plurality of filter cartridges (1) are connected to a common collecting vessel (37) and that this collecting vessel (37) is connected to a riser tube (38) passing to a pump.

10. Water filter as set forth in claim 9, characterized in that the collecting vessel (37) is of a flat shape, has a connection (39) for the riser (38) in the middle of its upper surface, and is provided around the connection (39) with the connections (40) for a plurality of filter cartridges (1).

11. Water filter as set forth in one of claims 1 to 10, characterized in that the pump casing (20; 32) is connected via a bajonet connection (23) to a drive motor (21) having a universally sealed housing, the drive being effected via magnetic flights acting through the walls of the casing and housing, respectively.

Fig. 1

Fig. 2

0 009 682

Fig.3

Fig.4

3